(19)

Europäisches Patentamt
European Patent Office
Office européen des brevets

(11) Numéro de publication: **0 187 602**
**A1**

(12) # DEMANDE DE BREVET EUROPEEN

(21) Numéro de dépôt: **85402637.4**

(51) Int. Cl.4: **B 01 D 59/32**

(22) Date de dépôt: **26.12.85**

(30) Priorité: **04.01.85 FR 8500089**

(43) Date de publication de la demande: **16.07.86 Bulletin 86/29**

(84) Etats contractants désignés: **CH DE GB IT LI**

(71) Demandeur: **COMMISSARIAT A L'ENERGIE ATOMIQUE**
**Etablissement de Caractère Scientifique Technique et Industriel**
**31/33, rue de la Fédération**
**F-75015 Paris(FR)**

(72) Inventeur: **Rostaing, Michel**
**21 av. du Vercors**
**F-38240 Meylan(FR)**

(72) Inventeur: **Roth, Etienne**
**103 rue Brancas**
**F-92310 Sevres(FR)**

(74) Mandataire: **Mongrédien, André et al,**
**c/o BREVATOME 25, rue de Ponthieu**
**F-75008 Paris(FR)**

(54) **Procédé de récupération de chaleur dans une instalation d'échange isotopique entre un liquide et un gaz, et installation mettant en oeuvre ce procédé.**

(57) L'invention concerne un procédé de récupération de chaleur dans une installation d'échange isotopique entre un liquide et un gaz et une installation mettant en oeuvre ce procéde.
Le liquide (3) et le gaz (5) sont mis en présence à co-courant dans au moins un réacteur d'échange isotopique (7a, 7b ... 7n), le liquide étant vaporisé (29a, 29b ... 29n) à l'entrée de chaque réactuer et condensé (27a, 27b ... 27n) lors du refroidissement des phases vapeur et gazeuse à la sortie de chaque réacteur. Ce procédé est caractérisé en ce qu'on récupère la chaleur extraite des vapeur et gazeuse lors du refroidissement à la sortie 21a, 21b ... 21n) de chaque réacteur d'échange isotopique (7a, 7b ... 7n) et en ce qu'on utilise la chaleur ainsi récupérée pour contribuer à la vaporisation du liquide et au préchauffage du gaz à l'entrée (23b ... 23n) d'un autre réacteur d'échange isotopique (7a, 7b ... 7n) de l'installation.
L'invention s'applique à une installation d'extraction et/ou de production de tritium ainsi qu'à l'extraction d'un isotope de l'hydrogène.

./...

FIG. 3
21a
27a
31a
33a
7a
29a
32a
25
3
a
11
27b
31b
21b
33b
7b
b
29b
32b
23b
27n
31a
21n
30
7n
33n
n
29n
32n
23n
26
5

0187602

# PROCEDE DE RECUPERATION DE CHALEUR DANS UNE INSTALLATION D'ECHANGE ISOTOPIQUE ENTRE UN LIQUIDE ET UN GAZ ET INSTALLATION METTANT EN OEUVRE CE PROCEDE

La présente invention concerne un procédé de récupération de chaleur dans une installation d'échange isotopique entre un liquide et un gaz et une installation mettant en oeuvre ce procédé. Elle s'applique notamment à une installation d'extraction du tritium de l'eau lourde $D_2O$ ou de l'eau légère $H_2O$ utilisées comme modérateur d'un réacteur nucléaire ou comme effluent d'usine de retraitement, par un gaz tel que le deutérium ou l'hydrogène suivant le cas. Elle peut aussi s'appliquer à l'extraction ou la séparation d'un isotope de l'hydrogène.

Le tritium est radioactif et doit donc être extrait de l'eau légère ou de l'eau lourde dans lesquelles il est produit par une réaction nucléaire entre des neutrons et des atomes de deutérium, le deutérium étant lui-même un isotope de l'atome d'hydrogène.

On peut extraire le tritium de l'eau à traiter suivant un procédé tel que celui décrit dans le brevet n° 1 526 867 déposé le 9 Août 1966 au nom du C.E.A. Selon ce procédé connu (voir figure 1a), on dérive en continu une fraction de l'eau contenue dans un réacteur nucléaire ou analogue 1.

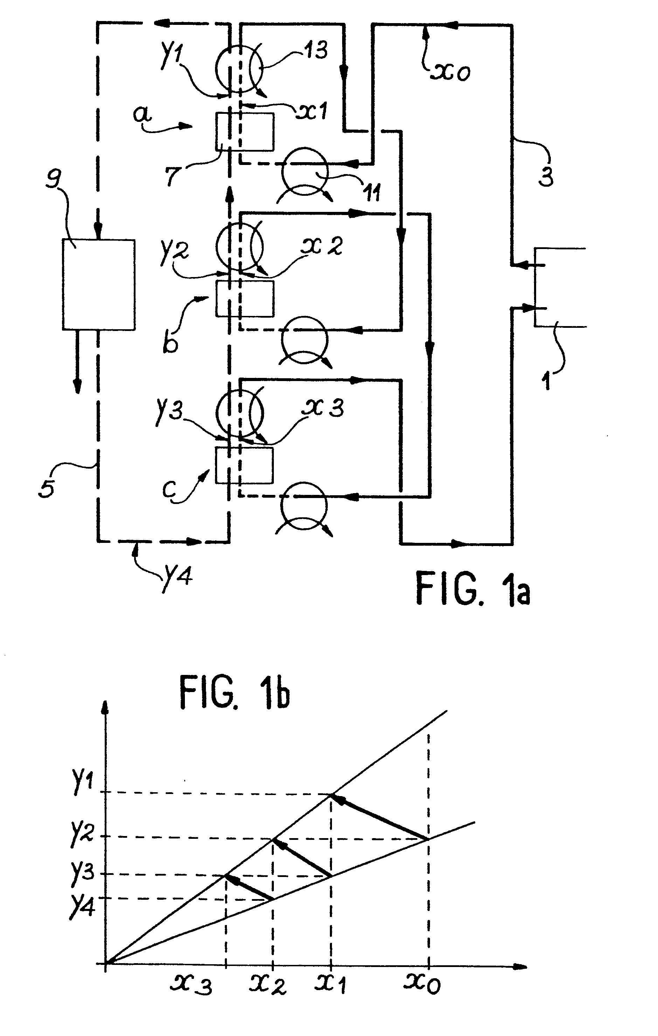

On soumet cette fraction dérivée 3 à une réaction d'échange isotopique avec un gaz 5 tel que le deutérium ou l'hydrogène pour abaisser la teneur de l'eau en tritium. Cet échange s'effectue dans un réacteur d'échange isotopique 7, l'ensemble d'une installation d'échange isotopique comprenant un ou plusieurs réacteurs disposés en série, comme le montre la figure 1a qui représente trois étages a, b, c.

Pour que la réaction d'échange isotopique ait lieu, l'eau doit être vaporisée avant l'entrée dans chaque réacteur 7 par un vaporisateur 11. Un refroidisseur 13 à la sortie de chaque réacteur 7 sépare les deux phases en condensant la vapeur et en refroidissant le gaz. Le gaz est à co-courant de l'eau à traiter dans chaque réacteur 7, mais globalement à contre-courant dans l'ensemble de l'installation. Le gaz enrichi en tritium est ensuite recyclé dans une installation de distillation 9, avant d'être renvoyé vers les réacteurs d'échange isotopique 7.

La figure 1b représente le diagramme de Mac Cabe et Thiele correspondant à l'installation de la figure 1a avec la teneur en tritium du gaz en ordonnées et du liquide en abscisses. L'eau présentant initialement une teneur $x_o$ en tritium, réagit dans un premier réacteur avec le gaz présentant une teneur $y_2$, pour donner les phases équilibrées après échange de teneurs $x_1$ et $y_1$ respectivement. L'eau présentant une teneur $x_1$ en tritium à la sortie du premier réacteur 7 est mise en contact dans le deuxième réacteur 7 avec le gaz présentant une teneur $y_3$, pour donner des phases équilibrées, avec des teneurs $x_2$ et $y_2$, respectivement. La répétition de ces opérations dans le ou les autres réacteurs 7 permet d'abaisser la teneur du tritium de l'eau jusqu'à la valeur souhaitée.

Dans ce type d'installation d'échange isotopique, le nombre d'étages, trois par exemple, et les débits, sont généralement tels que les problèmes d'économie de chaleur ne se posent pas. En revanche, lorsque le nombre d'étages est plus important, et les débits plus élevés, le coût énergétique de l'installation est élevé et les problèmes de récupération de chaleur se posent.

L'invention a pour but de remédier à cet inconvénient et notamment de réaliser un dispositif

0187602

permettant de récupérer de la chaleur à chaque étage d'une installation d'échange isotopique.

De façon plus précise, l'invention a pour objet un procédé de récupération de chaleur dans une installation d'échange isotopique entre un liquide et un gaz mis en présence à co-courant dans au moins un réacteur d'échange isotopique, le liquide étant vaporisé à l'entrée de chaque réacteur et condensé pour former un condensat lors du refroidissement des phases vapeur et gazeuse à la sortie de chaque réacteur. Ce procédé permet de récupérer la chaleur extraite des phases vapeur et gazeuse lors du refroidissement à la sortie de chaque réacteur d'échange isotopique et d'utiliser la chaleur ainsi récupérée pour contribuer à la vaporisation du liquide à l'entrée d'un réacteur d'échange isotopique de l'installation. A la sortie de chaque réacteur d'échange isotopique, correspond l'entrée de ce même réacteur ou d'un autre réacteur, avec laquelle elle échange de la chaleur.

De façon avantageuse, on chauffe le gaz à l'entrée d'un réacteur d'échange isotopique à partir de la chaleur récupérée à la sortie d'un réacteur de l'installation.

Selon un mode de réalisation, on utilise la chaleur récupérée à la sortie d'un réacteur pour contribuer à la vaporisation du liquide et au chauffage du gaz à l'entrée du même réacteur.

Selon un autre mode de réalisation, on récupère la chaleur à la sortie de chaque réacteur par échange thermique indirect entre les phases vapeur et gazeuse d'une part et le liquide et le gaz froid d'autre part.

Selon une variante de réalisation du procédé, on récupère la chaleur à la sortie de chaque réacteur pour contribuer à la vaporisation du liquide et au chauffage du gaz à l'entrée d'un autre réacteur.

Selon un mode préféré de réalisation, on récupère la chaleur et le condensat à la sortie de chaque réacteur par échange direct entre les phases vapeur et gazeuse d'une part et un liquide auxiliaire d'autre part, afin que ce dernier transfère par échange direct de la chaleur et du condensat à l'entrée d'un réacteur inférieur qui doit être alimenté par un liquide de même teneur isotopique que celle du condensat qu'on transfère.

Selon un autre mode de réalisation, on récupère la chaleur à la sortie de chaque réacteur par échange thermique indirect entre les phases vapeur et gazeuse d'une part et un liquide auxiliaire transférant la chaleur à l'entrée d'un réacteur supérieur par échange thermique direct d'autre part.

L'invention a également pour objet un dispositif de récupération de chaleur pour la mise en oeuvre du procédé comprenant :

- au moins un réacteur d'échange isotopique, parcouru à co-courant par un liquide et un gaz,
- des moyens pour vaporiser le liquide et chauffer le gaz à l'entrée de chaque réacteur,
- des moyens pour refroidir les phases vapeur et gazeuse à la sortie de chaque réacteur d'échange isotopique, une partie des moyens pour vaporiser et chauffer d'une part et pour refroidir d'autre part étant constituée par des échangeurs de chaleur et des moyens de transfert de chaleur de la sortie d'un réacteur d'échange isotopique de l'installation vers l'entrée d'un réacteur d'échange isotopique de l'installation.

Les caractéristiques et avantages de l'invention ressortiront mieux de la description qui va suivre donnée à titre purement illustratif et non limitatif, en référence aux figures annexées 2 à 4 qui font suite aux figures 1a et 1b, dans lesquelles :

- les figures 1a et 1b décrites précédemment représentent respectivement une installation d'échange isotopique connue de l'art antérieur et le diagramme de Mac Cabe et Thiele correspondant avec la teneur en tritium du gaz en ordonnée et du liquide en abscisse.
- la figure 2 représente une installation d'échange isotopique à un seul étage équipée de moyens de récupération de chaleur par échange de chaleur indirect;
- la figure 3 représente une installation d'échange isotopique sur plusieurs étages équipés de moyens de récupération de chaleur par échange de chaleur direct.

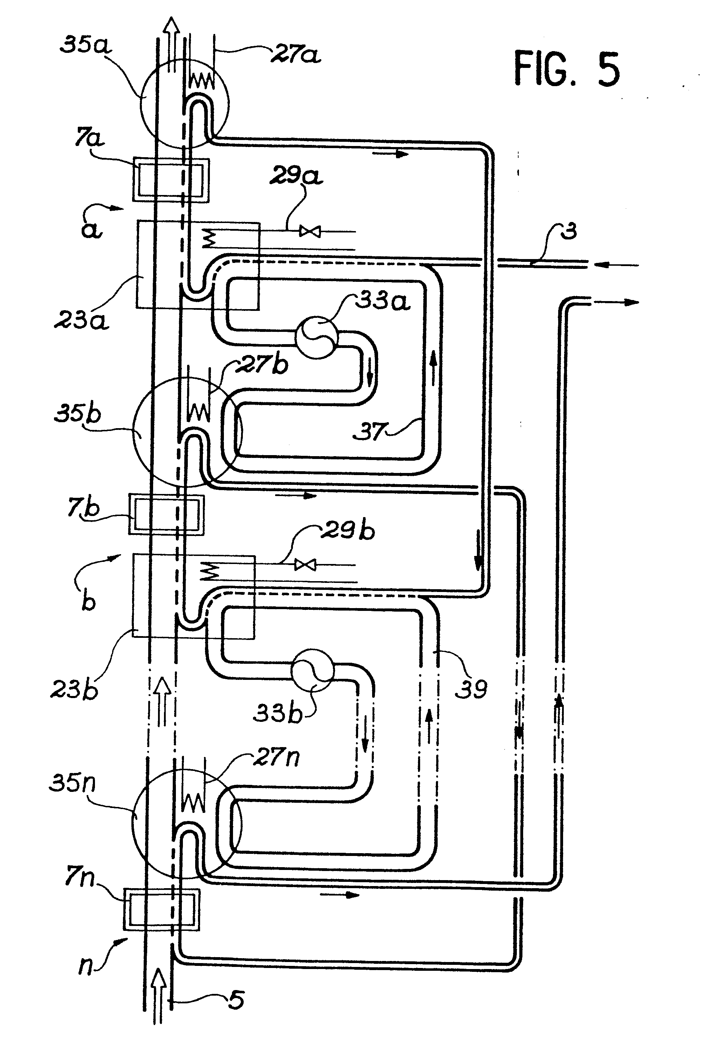

- le diagramme de la figure 4 représente les variations de la chaleur totale associée à 1 kg de gaz en Kcal en fonction de la température en °C, à pression atmosphérique, lors d'une récupération de chaleur par échange direct selon un procédé conforme à l'invention. Les différentes courbes a, b et c représentent respectivement la récupération de chaleur effectuée à la sortie d'un étage d'échange isotopique, l'évolution du mélange liquide-gaz au cours de cet échange et enfin la restitution de chaleur à l'entrée d'un étage d'échange isotopique.

- la figure 5 représente une installation d'échange isotopique sur plusieurs étages équipés de moyens de récupération de chaleur par échange de chaleur mixte.

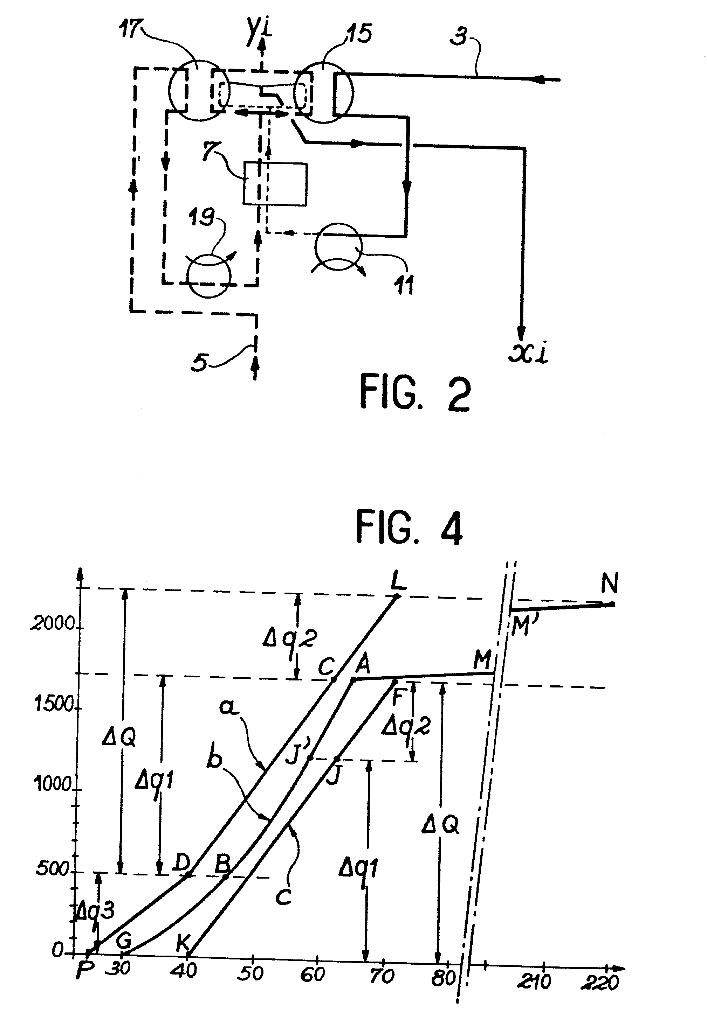

La figure 2 représente une installation d'échange isotopique à un seul étage comprenant de façon connue un réacteur 7 dans lequel l'eau à traiter, vaporisée par un système de chauffage 11 est mise en contact du gaz chauffé par un système de chauffage 19. Ces deux systèmes de chauffage 11 et 19 peuvent être constitués par tout moyen connu.

Conformément à l'invention, ces systèmes 11 et 19 servent seulement à réaliser un appoint de chaleur nécessaire à la vaporisation de l'eau et au chauffage du gaz, un préchauffage de ces deux fluides étant effectué par deux échangeurs récupérateurs de chaleur indirects 15, 17.

Ces deux échangeurs 15, 17 sont placés à la sortie du réacteur d'échange isotopique 7, à partir duquel les deux phases en présence se scindent en deux. Une partie du gaz et du liquide vaporisé traverse l'échangeur de chaleur 15, pour transférer la chaleur à l'eau, afin de préchauffer celle-ci avant qu'elle ne soit vaporisée en 11.

0187602

L'autre partie du gaz et du liquide vaporisé traverse un deuxième échangeur 17 en contact avec le gaz, afin de préchauffer celui-ci avant qu'il ne traverse le système de chauffage 19.

Les deux phases sortant du réacteur sont refroidies d'un côté par le gaz froid passant dans l'échangeur 17 et de l'autre par le liquide froid passant dans l'échangeur 15. L'eau condensée $x_i$ et le gaz refroidi $y_i$ sortant de l'étage, en équilibre isotopique peuvent ainsi être séparés sans apport d'énergie extérieure. De plus, l'eau froide passant dans l'échangeur 15 et le gaz passant dans l'échangeur 17 sont préchauffés au contact des deux phases sortant du réacteur d'échange isotopique 7, de sorte que l'apport de chaleur nécessaire pour vaporiser cette eau et chauffer le gaz dans les systèmes 11 et 19 à l'entrée du réacteur est réduit.

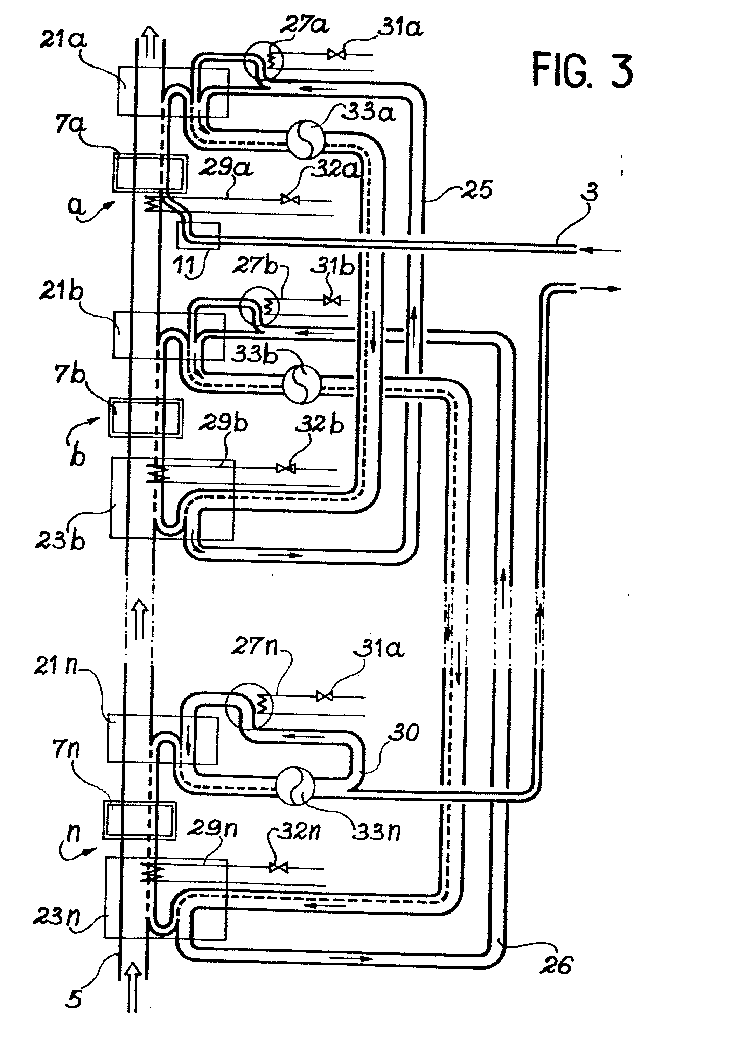

La figure 3 représente une installation d'échange isotopique à plusieurs étages a, b...n, avec n entier positif, comprenant de façon connue des réacteurs 7a, 7b... 7n dans lesquels l'eau vaporisée par des systèmes de chauffage 29a, 29b...29n est mise en contact à co-courant du gaz chauffé par ce même système. Ces systèmes de chauffage peuvent être constitués par tout moyen connu et servent seulement à réaliser un apport de chaleur nécessaire à la vaporisation de l'eau et au chauffage du gaz à l'entrée de chaque réacteur. Conformément à l'invention, un préchauffage de ces deux fluides est effectué par l'intermédiaire d'échangeurs récupérateurs de chaleur 21a, 21b... 21n et 23b...23n à contact direct et par des boucles de transfert 25, 26.... Ces échangeurs récupérateurs de chaleur 21a, 21b ... 21n et 23b ... 23n sont constitués par des colonnes d'échange thermique.

Les colonnes de récupération de chaleur et de condensation 21a, 21b ... 21n sont placées à la sortie des réacteurs et assurent la condensation du liquide vaporisé et le refroidissement du gaz en sortie de chaque réacteur. Les colonnes de réchauffage et saturation 23b...23n sont placées à l'entrée des réacteurs 7b... 7n et assurent la vaporisation du liquide et le chauffage du gaz en entrée de ces réacteurs. Le transfert de chaleur entre les colonnes d'échange 21a, 21b ... 21n et 23b ... 23n est assuré par des boucles 25, 26 .... dans lesquelles circule un liquide venant du liquide à traiter.

Le liquide des boucles 25, 26 ... se mélange à la phase vapeur qui se condense dans les colonnes 21a, 21b ... 21n. L'ensemble du liquide est alors véhiculé à travers les boucles 25, 26 ... transférant la chaleur récupérée à la sortie d'un étage, à l'entrée d'un étage inférieur, ainsi que le liquide à traiter à la teneur isotopique correspondante.

La chaleur véhiculée par les boucles 25, 26... est cédée dans les colonnes de réchauffage et de saturation 23b... 23n, dans lesquelles le gaz entrant dans les étages est réchauffé et une partie du liquide venant des boucles est vaporisée. La vaporisation du liquide pénétrant dans l'étage supérieur de l'installation est réalisée au moyen d'un système de chauffage classique 11. De même, une boucle 30 associée à l'étage inférieur seulement assure le transfert de chaleur entre la colonne 21n associée à cet étage et un système de refroidissement classique 27n.

Comme la récupération n'est pas totale, il faut sur chaque boucle des appoints de chaleur (systèmes de chauffage 29a, 29b ... 29n) et de refroidissement (systèmes 27a, 27b ... 27n). Les systèmes de chauffage 29a, 29b ... 29n sont constitués par des éléments chauffants tels que des faisceaux tubulaires de vapeur ou des éléments électriques, placés par exemple dans la partie supérieure des colonnes de réchauffage et saturation 23b ... 23n.

Les systèmes de refroidissement 27a, 27b... 27n sont constitués notamment par des échangeurs refroidisseurs contenant un liquide, provenant d'une source de refroidissement auxiliaire. Ces systèmes sont placés par exemple dans la partie supérieure des colonnes de récupération et de condensation 21a, 21b... 21n.

Les différentes colonnes 21a, 21b... 21n et 23b... 23n peuvent être superposées, soit deux par deux, soit en plus grand nombre, si le projet montre une plus grande économie dans cette réalisation.

Dans toutes les colonnes de condensation 21a, 21b... 21n, les conditions thermiques (température, quantité de chaleur transférée) sont identiques. Il en est de même pour les colonnes de réchauffage et de saturation 23b... 23 n.

Des pompes 33a, 33b... 33n assurent à chaque étage la circulation du liquide à traiter et du liquide circulant dans les boucles 25, 26, 30. Des vannes de régulation 31a, 31b... 31n et 32a, 32b... 32n, placées dans le circuit primaire de chaque échangeur thermique 27a, 27b... 27n et 29a, 29b... 29n assurent la régulation des appoints de refroidissement et de chaleur.

Le diagramme de la figure 4 représente les variations de la chaleur totale associée à 1kg d'$H_2$ en Kcal, correspondant à la chaleur nécessaire pour porter 1 kg de gaz à la température considérée et pour saturer le gaz à cette température en chauffant le liquide, en fonction de la température en °C, lors d'une récupération de chaleur par échange de chaleur direct selon un procédé conforme à l'invention.

La courbe a représente les récupérations de chaleur effectuées à la sortie d'un étage d'échange isotopique. La courbe b représente l'évolution du mélange liquide et gaz au cours de cet échange et enfin la courbe c représente la restitution de chaleur effectuée à l'entrée d'un étage d'échange isotopique.

Selon ce diagramme, à l'entrée de chaque réacteur, le gaz et l'eau préalablement vaporisée sont chauffés jusqu'à la température de 220°C (point N) correspondant à la température d'échange isotopique de $H_2$ avec de l'eau légère chargée en tritium. Au-delà du point A représenté sur le diagramme, c'est-à-dire AMM'N, le gaz et la vapeur se comportent comme une phase gazeuse classique avec une chaleur spécifique moyenne sensiblement constante.

Le gaz et la vapeur d'eau sont ensuite refroidis à la sortie du réacteur d'échange isotopique, au contact d'un contre-courant de liquide et évoluent suivant les points N, M', M, A, B du diagramme en cédant de la chaleur au liquide caloporteur circulant dans la boucle de transfert correspondante. Ce liquide passe ainsi de D en L, c'est-à-dire de la température $t_D$ = 40° à celle de $t_L$ = 71,5°. Le liquide absorbe d'abord la quantité de chaleur $\Delta q_1$ de D en C cédé par le gaz et la vapeur qui se condense, puis $\Delta q_2$ de C en L cédé par les phases gazeuses qui passent de la température de 220 à 65°C.

La pente DC est déterminée par le débit du liquide qui doit toujours être à une température inférieure à celle de la phase gazeuse. De plus, par translation des points de D vers K correspondant à la température de 40° et de C vers J correspondant à la température de 62,5°, on doit obtenir une ligne de fonctionnement de la boucle de transfert de chaleur qui permette au liquide de céder la quantité de chaleur $\Delta q_1$ au gaz en le réchauffant et le saturant de G en J' correspondant aux températures de 30° et 57°C. Le segment DC détermine le débit $l_B$ de boucle : $l_B = \frac{\Delta q1}{t_C - t_D}$ par kg d'$H_2$. La quantité de chaleur $\Delta q_2$ est restituée dans la colonne de saturation et de réchauffage suivant les points FJ.

Les récupérations et restitutions de chaleur totales sont donc :

$\Delta Q = \Delta q_1 + \Delta q_2$

Les pertes $q_3$ correspondent aux appoints de chaleur et de refroidissement, avec les quantités de chaleur $+ \Delta q_3$ apporté par le vaporisateur et $-\Delta q_3$ apporté par le réfrigérant nécessaire pour amener le gaz et l'eau à traiter de la température ambiante à la température de 40° suivant l'exemple décrit.

Dans l'exemple décrit ci-dessus, l'ordre de grandeur de la récupération de chaleur, donnée par la relation $\frac{\Delta Q}{\Delta Q+\Delta q3}$ est d'environ 77 %.

La figure 5 représente une installation d'échange isotopique sur plusieurs étages a, b... n, avec n entier positif, équipés de moyens de récupération de chaleur par échange de chaleur mixte, c'est-à-dire par échange de chaleur direct et indirect. Les échangeurs de chaleur indirect 35a, 35b ... 35n sont placés à la sortie des réacteurs d'échange isotopique 7a, 7b... 7n et les colonnes d'échange de chaleur direct 23a, 23b...23(n-1) sont placées à l'entrée des réacteurs 7a, 7b... 7(n-1). Des boucles 37, 39 assurent le transfert de chaleur de la sortie d'un étage d'échange isotopique à l'entrée d'un étage supérieur.

Le liquide à traiter arrive dans les colonnes d'échange direct 23a, 23b... 23(n-1) après mélange avec le liquide des boucles 37, 39...chauffé préalablement dans les échangeurs de chaleur indirect 35a, 35b... 35n. Dans ces colonnes 23a, 23b...23(n-1) une partie du liquide est vaporisée et le gaz préchauffé. Le reste du liquide est véhiculé dans les boucles 37, 39... vers les échangeurs indirects 35a, 35b... 35n de la sortie des étages inférieurs. Dans ces échangeurs indirects, le liquide des boucles refroidit le mélange vapeur-gaz sortant des réacteurs d'échange isotopique 7a, 7b..., 7n et récupère ainsi de la chaleur qu'il transfèrera à nouveau à l'entrée des étages supérieurs 23a, 23b ... 23(n-1).

Des pompes 33a, 33b... 33n assurent la circulation du liquide.

Comme dans les procédés de récupération de chaleur précédemment décrits, des appoints de chaleur 29a, 29b... sont nécessaires pour vaporiser le liquide et chauffer le gaz à la température d'échange isotopique avant l'entrée de ces phases dans les réacteurs d'échange isotopique 7a, 7b... et des appoints de refroidissement 27a, 27b... 27n sont nécessaires pour condenser le liquide à la sortie des étages d'échange isotopiques.

L'allure générale d'un diagramme représentant les variations de la chaleur totale en fonction de la température, correspondant à ce procédé de récupération de chaleur par échange de chaleur mixte est équivalent à celui représenté en figure 4 aux valeurs des températures et des quantités de chaleur totale près.

La récupération de chaleur dans une installation d'échange isotopique peut se faire par échange thermique indirect, direct ou mixte. Le procédé de récupération de chaleur par échange de chaleur direct est le plus avantageux du point de vue quantité de chaleur récupérée.

Les procédés de récupération de chaleur conformes à l'invention permettent une économie de chaleur d'autant plus grande que l'installation d'échange isotopique est vaste, c'est-à-dire comportant un fort débit et un nombre d'étages important.

REVENDICATIONS

1. Procédé de récupération de chaleur dans une installation d'échange isotopique entre un liquide (3) et un gaz (5) mis en présence à co-courant dans au moins un réacteur d'échange isotopique (7, 7a, 7b... 7n), le liquide étant vaporisé (29a, 29b... 29n) à l'entrée de chaque réacteur et condensé (27a, 27b... 27n) pour former un condensat lors du refroidissement des phases vapeur et gazeuse à la sortie de chaque réacteur, procédé caractérisé en ce qu'on récupère la chaleur extraite des phases vapeur et gazeuse lors du refroidissement à la sortie (21a, 21b... 21n) (35a, 35b... 35n) de chaque réacteur d'échange isotopique (7, 7a, 7b... 7n) et en ce qu'on utilise la chaleur ainsi récupérée pour contribuer à la vaporisation du liquide à l'entrée (23a, 23b... 23n) d'un réacteur d'échange isotopique (7, 7a, 7b... 7n) de l'installation.

2. Procédé selon la revendication 1, caractérisé en ce que l'on chauffe le gaz à l'entrée d'un réacteur d'échange isotopique à partir de la chaleur récupérée à la sortie (21a, 21b... 21n) (35a, 35b... 35n) d'un réacteur de l'installation.

3. Procédé selon la revendication 2, caractérisé en ce que l'on utilise la chaleur récupérée à la sortie d'un réacteur pour contribuer à la vaporisation du liquide et au chauffage du gaz à l'entrée du même réacteur.

4. Procédé selon la revendication 2 ou 3, caractérisé en ce qu'on récupère la chaleur à la sortie (15, 17) de chaque réacteur par échange thermique indirect entre les phases vapeur et gazeuse d'une part et le liquide et le gaz froid d'autre part.

5. Procédé selon la revendication 2, caractérisé en ce qu'on récupère la chaleur à la sortie de chaque réacteur pour contribuer à la vaporisation du liquide et au chauffage du gaz à l'entrée d'un autre réacteur.

6. Procédé selon l'une quelconque des revendications 1, 2 et 5, caractérisé en ce qu'on récupère la chaleur et le condensat à la sortie (21a, 21b... 21n) de chaque réacteur par échange direct entre les phases vapeur et gazeuse d'une part et un liquide auxiliaire (25, 26) d'autre part, afin que ce dernier transfère par échange direct de la chaleur et du condensat à l'entrée (23b... 23n) d'un réacteur inférieur qui doit être alimenté par un liquide de même teneur isotopique que celle du condensat qu'on transfère.

7. Procédé selon l'une quelconque des revendications 1, 2 et 5, caractérisé en ce qu'on récupère la chaleur à la sortie (35a, 35b... 35n) de chaque réacteur par échange thermique indirect entre les phases vapeur et gazeuse d'une part et un liquide auxiliaire (37, 39) transférant la chaleur à l'entrée (23a, 23b... 23(n-1), d'un réacteur supérieur par échange thermique direct d'autre part.

8. Dispositif de récupération de chaleur pour la mise en oeuvre du procédé selon l'une quelconque des revendications 1 à 7 comprenant :

- au moins un réacteur d'échange isotopique (7, 7a, 7b... 7n) parcouru à co-courant par un liquide et un gaz,
- des moyens (11, 19) (29, 23) pour vaporiser le liquide et chauffer le gaz à l'entrée de chaque réacteur (7, 7a, 7b... 7n),
- des moyens (15, 17) (27, 21, 35) pour refroidir les phases vapeur et gazeuse à la sortie de chaque réacteur (7, 7a, 7b... 7n) caractérisé en ce qu'une partie des moyens pour vaporiser et chauffer d'une part et pour refroidir d'autre part, est constituée par des échangeurs de chaleur (17, 15) (21, 23) (35, 23) et des moyens de transfert (25, 26) (37, 39) de chaleur de la sortie d'un réacteur de l'installation vers l'entrée d'un réacteur de l'installation.

y1
13
x0
x1
a
7
11
3
9
y2
x2
b
1
y3
x3
5
c
y4

FIG. 1a

FIG. 1b

y1
y2
y3
y4
x3
x2
x1
x0

17
yi
15
3
7
19
11
5
xi

FIG. 2

FIG. 4

L
N
M'
2000
Δq2
C
A
M
1500
a
F
Δq2
ΔQ
J'
b
J
1000
Δq1
ΔQ
D
B
500
Δq1
c
Δq3
G
K
0
P
30
40
50
60
70
80
210
220

21a
27a
31a
7a
33a
29a
32a
a
25
3
11
27b
31b
21b
33b
7b
29b
32b
b
23b
27n
31a
21n
30
7n
33n
29n
32n
n
23n
26
5

FIG. 3

FIG. 5
35a
27a
7a
29a
a
3
23a
33a
27b
35b
37
7b
29b
b
23b
39
33b
27n
35n
7n
n
5

Office européen des brevets

# RAPPORT DE RECHERCHE EUROPEENNE

0187602

Numéro de la demande

EP 85 40 2637

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int Cl 4) |
|---|---|---|---|
| | | | B 01 D 59/32 |
| X | US-A-3 940 473 (SPEVACK)<br>* Revendications 1,2 *<br>--- | 1,6,7 | |
| X | US-A-3 907 509 (SPEVACK)<br>* Revendications 1,3 *<br>--- | 1,5,7 | |
| A | FR-A-2 306 004 (CEA)<br>* Revendications 1-3 *<br>--- | 1,5 | |
| A | US-A-4 192 847 (SPEVACK)<br>----- | | |
| | | | DOMAINES TECHNIQUES RECHERCHES (Int. Cl.4) |
| | | | B 01 D<br>G 21 C<br>C 01 B |

Le présent rapport de recherche a été établi pour toutes les revendications

| Lieu de la recherche | Date d achèvement de la recherche | Examinateur |
|---|---|---|
| LA HAYE | 27-02-1986 | NICOLAS H.J.F. |

CATEGORIE DES DOCUMENTS CITES

- X : particulièrement pertinent à lui seul
- Y : particulièrement pertinent en combinaison avec un autre document de la même catégorie
- A : arrière-plan technologique
- O : divulgation non-écrite
- P : document intercalaire
- T : théorie ou principe à la base de l'invention
- E : document de brevet antérieur, mais publié à la date de dépôt ou après cette date
- D : cité dans la demande
- L : cité pour d'autres raisons
- & : membre de la même famille, document correspondant

OEB Form 1503 03 82